# EUROPEAN PATENT APPLICATION

(11) **EP 3 251 807 A1**
(43) Date of publication of application: **06.12.2017**
(21) Application number: 15862052.6
(22) Date of filing: 04.11.2015
(51) Int. Cl.: B27B 33/08

(54) **CUTTING ELEMENT AND METHOD FOR OBTAINING A REMOVER DEVICE IN A CUTTING ELEMENT**

(30) Priority: 21.11.2014 BR 102014029126
(71) Applicant: Franzoi Ferramentas Indústria e Comércio Ltda., 95043-670 Caxias do Sul - RS (BR)
(72) Inventor: DESTEFANI, Argemiro, 95055-035 Caxias do Sul - RS (BR)
(74) Representative: Girardi, Giovanna Paola
(86) International application number: PCT/BR2015/000169
(87) International publication number: WO 2016/077896

(57) **Abstract**

A cutting element is described which promotes the removal of material through friction, such as saw blades, cutting tools applied to milling machines, among others, said cutting element having retractors formed by the deposition of metal and/or carbides on the surface of said cutting element, replacing the conventionally used hard metal insert.

## Description

### FIELD OF INVENTION

The present invention describes a cutting element and the respective method of obtaining a retractor in a cutting element. More specifically, it comprises a cutting element which promotes the removal of material by friction, such as saw blades, cutting tools applied to milling machines, among others, said cutting element provided with retractors configured by depositing metal and/or carbides on the surface of said cutting element, replacing the conventionally used hard metal insert.

### BACKGROUND OF THE INVENTION

The cutting elements or tools are used to remove different materials (wood, plastic, metals and other materials) through friction on the surface of the material.

Some of these cutting elements or tools have retractors (or scrapers or cleaners) that are areas with increased thickness deployed on the surface of the cutting element in order to avoid attrition between the surface of the cutting element and the material to be cut.

Conventionally, such increase in the thickness on the cutting element surface is achieved by welding hard metal bars into windows provided in the body of said cutting element.

However, this process requires that the cutting element be cut for the insertion of the carbide insert, which compromises the structure of the cutting element and causes an increase in thickness as compensation, which is very difficult for blades with thickness of up to 2.0 millimeters.

The prior art describes blades with welded retractors, such as the documents CN201132341, CN201712033 and CN202480176.

Document US4173914 discloses scrapers welded to circular saw blades provided with five facets.

Document PI1105960 discloses inserts, which are shaped during the pressing of metal powders, followed by heat treatment for sintering.

Document MU9000317 discloses a saw blade comprising indentations having alternating lateral curvature interspersed with regions of concavity, said indentations and the base of the indentations coated with hard chromium by electroplating.

Therefore, the prior art does not describe or suggest a cutting element having retractors associated to the surface through the deposition of metal and/or carbides.

Accordingly, the object of the present invention is a cutting element with retractors configured by the deposition of metal and/or carbides and the respective process of obtaining a retractor on a cutting element replacing the welding of a hard metal insert to the body of the cutting element.

### SUMMARY

The invention is characterized by a cutting element and the respective manufacturing process which eliminates the need to cut and weld a carbide insert on the surface.

The invention is characterized by a cutting element and respective manufacturing process that improves the rigidity of the blade and increases its life.

The invention is characterized by a cutting element and respective manufacturing process that reduces the overheating of blades shorter than 2.0 mm by decreasing attrition.

### BRIEF DESCRIPTION OF FIGURES

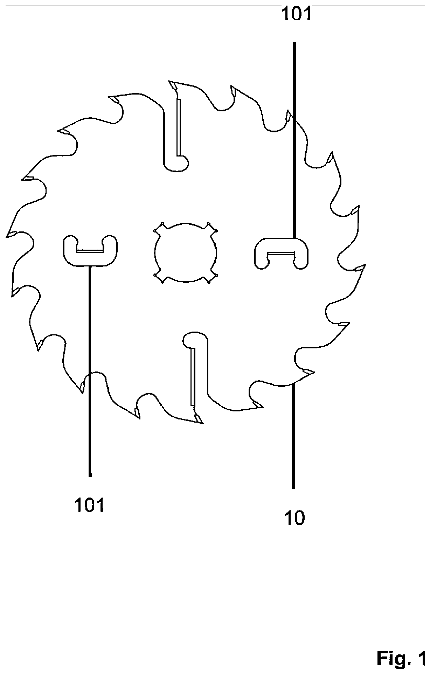

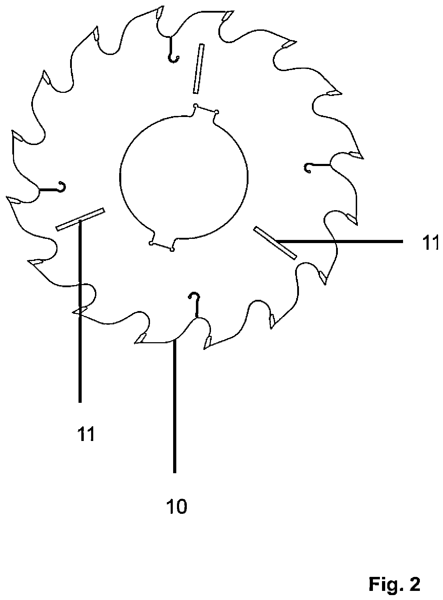

Figure 1 shows the top view of a cutting element, in this case a circular saw, provided with indentions to weld the carbide inserts forming the scrapers. [016] Figure 2 shows the top view of a cutting element, in this case a circular saw, in which the scrapers are configured by depositing metal and/or carbide on the surface of the blade.

### DETAILED DESCRIPTION OF THE INVENTION

The cutting element, the object of the present invention, comprises a body (10) which promotes friction on a work surface to remove material.

This body comprises a saw blade, such as circular saws or a band saw, or cutting tools for this purpose, among others.

On the surface of the cutting element (10) there are provided areas with increased thickness at specific points with a predetermined position, forming scrapers (11) in order to keep the cutting element body away from the material to be sectioned, avoiding overheating caused by attrition during the material removal operation. Thus, the step of opening windows or indentions (101) through the surface of the cutting element, as shown in figure 1, is eliminated.

The increase in thickness on the surface of the cutting element (10) is obtained by the deposition of metals, carbides or a combination of metals and carbides on the surface of said cutting element (10).

The carbides comprise Tungsten, Cobalt, Nickel or Chrome.

The deposition of metals and/or carbides on the surface of the cutting element is achieved by casting or impact adhesion and may be carried out by means of thermal spraying, laser, combustion metalizing, induction heating or flame, or high-speed deposition [such as HVOF (High Velocity Oxygen Fuel).

Optionally, the retractors (11) can be formed on the surface of the cutting element by injecting a polymeric material into small openings provided in the cutting element, forming a bed for the deposition of the metal and/or carbide.

## Claims

1. CUTTING ELEMENT **characterized by** comprising a body (10) whose surface has areas with increased thickness at specific points with a previously established position, forming scrapers (11) by the deposition of metals, carbides, or a combination of metals and carbides on the surface of said cutting element (10).

2. CUTTING ELEMENT, according to claim 1, **characterized in that** the carbides are chosen from Tungsten, Cobalt, Nickel or Chrome.

3. PROCESS OF OBTAINING A RETRACTOR IN A CUTTING ELEMENT **characterized in that**

4. PROCESS OF OBTAINING A RETRACTOR IN A CUTTING ELEMENT **characterized in that** this is obtained by the deposition of metals and/or carbides on the surface of the cutting element through casting or impact adhesion.
